# EUROPEAN PATENT SPECIFICATION

(11) **EP 0 768 224 B1**
(45) Date of publication and mention of the grant of the patent: **05.01.2000**
(21) Application number: 95307220.4
(22) Date of filing: 11.10.1995
(51) Int. Cl.: B60T 17/22, B60T 7/04, B60T 13/66, B60T 8/32

(54) **Actuation means for an electronically controlled brake system of a motor vehicle**
Betätigungseinrichtung für ein elektronisch gesteuertes Bremssystem eines Kraftfahrzeuges
Dispositif d'actionnement pour un système de freinage à commande électronique d'un véhicule à moteur

(43) Date of publication of application: 16.04.1997
(73) Proprietor: LUCAS INDUSTRIES PUBLIC LIMITED COMPANY, Solihull, West Midlands B91 3TX (GB)
(72) Inventor: Poertzgen, Gregor, D-56068 Koblenz (DE)
(74) Representative: Schmidt, Steffen J., Dipl.-Ing.

(56) References cited:
- WO-A-95/29830
- DE-A- 2 249 007
- DE-A- 2 327 508
- DE-A- 4 343 314
- DE-A- 4 343 386
- DE-C- 4 102 497
- FR-A- 2 318 060
- GB-A- 2 128 279
- US-A- 3 690 737
- US-A- 4 812 777
- US-A- 5 312 172
- PATENT ABSTRACTS OF JAPAN vol. 16 no. 585 (M-1347) ,25 December 1992 & JP-A-04 232154 (TOYOTA MOTOR CORP.) 20 August 1992,

## Description

The present invention relates to an actuation means suitable for use in an electronically controlled brake system of a motor vehicle, according to the preamble of claim 1.

Brake cylinder means of differing designs are well known in the art. However, in so-called "brake by wire" brake systems, there are various problems with respect to suitable brake pedal means. In brake by wire systems the actuation of the brake pedal by a driver is sensed electronically by a sensor means coupled to the brake pedal. The signal derived from said sensor means is fed into an electronic control unit (ECU). In said electronic control unit the input signal is processed and an electronical output signal is provided to activate an electromechanical actuator which operates on brake pads at the wheels.

For safety reasons it is necessary to provide a path parallel to the brake by wire path described above. This parallel path is from the brake pedal means via a fluid brake cylinder to an hydraulic actuator operating the brake pads at the wheels in case the brake by wire path fails.

Such a system is called a "push-through-system". During a normal actuation, where the brake by wire path is operable, the hydraulic piston is inoperative. During an emergency actuation where the brake by wire path is inoperative, the signal from the sensor means is ignored or not present, the brake pedal is "pushing-through" the brake cylinder and feeds hydraulic fluid to the brake pads at the vehicle wheels in order to decelerate the vehicle.

DE 43 43 314 A1 discloses a "Brake-By-Wire" brake system for motor vehicles, with an electric motor driving a pump for supplying hydraulic fluid under high pressure, and a piston sliding in a chamber of a housing. The chamber is optionally connected to brake circuits of the brake system during an emergency actuation. The piston is connected to a brake pedal. A pedal feeling simulator is provided, including a spring resiliently biasing the brake pedal. Two sensors, one sensing the pedal angle, the other sensing the pressure in the chamber of the piston, supply signals concerning the state of the system. The signals are compared in a control unit to identify an emergency situation. The spring of the pedal feeling simulator is connected to the brake pedal and mounted within the housing in parallel to the piston.

DE 23 27 508 A1 discloses a break actuation device, having an emergency break piston for feeding hydraulic fluid into hydraulic circuits of a break system. The piston is actuated by an actuation rod of a break pedal. A signal generator is connected with the break actuation device for generating a signal representative for the degree of break pedal actuation. The signal generator is located between the actuation rod and the piston, outside of the break actuation device and comprises a spring. By actuating the break pedal the actuation rod is moved and the spring is compressed. The applied force is related to the amount of compression. Thus, by detecting the compression of the spring by a distance measuring system the signal generator works as a force sensor. The force signal is compared with an acceleration signal of the vehicle acceleration and the brakes are controlled accordingly.

DE 22 49 007 A1, which shows all the features of the preamble of claim 1, discloses an emergency break piston actuated by an actuation rod of a break pedal and a signal generator located between the actuation rod and the piston, outside of the break actuation device. The signal generator comprises a spring for generating a signal representative for the degree of force applied to the break pedal. DE 22 49 007 A1 further describes a pressure sensor and a comparator. The coparator triggers switching operations of hydraulic valves. The construction of the sensors is not relevant for the control principle of this disclosure. Thus, the principle of this prior art is to control the pressure in the hydraulic circuits related to the degree of force applied at the break pedal. The pressure sensor can also be used for detecting leakage in the hydraulic circuits.

In JP-042 32 154 A a force and a stroke sensor at a brake operation member are disclosed. The two sensors are used as redundant system for detecting whether one of them failed.

One problem with respect to the above described actuation means is the risk of a broken spring means or a spring means stuck in its guiding should such a guiding be present. The spring means is responsible for the "pedal feeling" for a driver. If the spring means is inoperative, the brake pedal can not be used in a satisfactory manner. Moreover, during an absence of a properly working spring means the brake pedal might be actuated once but will not be returned to its rest position. Therefore, it would be impossible to safely drive the motor vehicle.

From the above it becomes apparent that it is important to be able to check the functionality and operability of the spring means.

One object underlying the present invention is to provide an actuation means suitable for use in an electronically controlled brake system which is simple and reliable.

To solve this reliability problem, the prior art actuation means includes at least a force sensor, a pressure sensor and an acceleration sensor for sensing these dimension related to an actuation of the brake pedal.

The sensor adapted for sensing a force representative for an actuation force acting on the brake pedal allows for a very accurate and direct sensing of the actuation of the brake pedal means by a driver. In contrast to this, a pressure sensor is influenced by all kinds of pressure variation within the hydraulic circuits. An acceleration sensor is influenced by the inertia of the vehicle. Thus, prior art sensor combinations are not sufficient for checking functionality and operability of the spring means. In addition, in prior art break actuation devices, as described in DE 23 27 508 A1 and DE 22 49 007 A1, a rupture of the spring would cause a situation of serious danger, as the brake pedal could move without any force being applied to it. The movement would be detected by the displacement sensor of the force sensor, the signal would be interpreted as a brake demand by the driver and this would lead to a brake actuation. Such an undefined brake actuation could lead to uncontrolled performance and could cause accidents.

The actuation means according to the invention is characterized in that the member is a second piston of the cylinder/piston means not for feeding hydraulic fluid into the brake system of the motor vehicle, in that the second piston and the spring means being located within the cylinder/piston means, and in that a second of the sensor means is sensing the distance between a predetermined location on said brake pedal and a location being in a fixed relation to a support means of said brake pedal, or resulting from a movement of the second piston relative to the cylinder of said cylinder/piston means.

The provision of a force sensor and a linear detector allows for sensing physical dimensions and values that are suitable for recognising any malfunction of the actuation means and especially of the spring means resiliently biasing the brake pedal against an actuation direction of the brake pedal.

If a rupture of the spring means occurs, the distance measured by the linear detector is inconsistent with the force acting on the stepping plate sensed by the force sensor.

Due to the fact that the path travelled by the brake pedal from its rest position to its fully actuated position is relatively long, a good resolution of the measured travel path can be obtained. Wear or play of the brake pedal means and its support means do not have a great influence. Again, the long distance between the rest position and the fully actuated position of the brake pedal means provides for a high resolution of the sensed travel path.

Presently preferred embodiments and enhancements thereof are claimed in dependent claims 2 to 6 and are explained hereinafter.

Preferably, a third of said sensor means is adapted for sensing a pressure representative for a pressure in a chamber of the cylinder/piston means delimited by the first piston. Since this pressure may be sensed in the brake system also to check other situations, there are usually no additional costs involved.

In a preferred embodiment, the spring means is mounted coaxially to the first and second piston of said cylinder/piston means and/or said actuation rod.

Preferably, a support means for supporting the cylinder of the cylinder/piston means relative to the brake pedal means is rigidly mounted to the cylinder of the cylinder/piston means.

The present invention also relates to an electronically controlled brake system of a motor vehicle having an actuation means as described above, wherein a valve means is mounted intermediate said cylinder/piston means and the brake system of the motor vehicle to separate a chamber of the cylinder/piston means delimited by the first piston from the brake system during a normal actuation and to connect the chamber of the cylinder/piston means with the brake system for an emergency actuation.

Preferably, said electronic control unit (ECU) is adapted to put sensor signals representing a dimension resulting from an actuation of the brake pedal into a relation with a speed, acceleration and/or traction signal resulting from the rotational behaviour of the wheels of said motor vehicle.

Further features, characteristics and advantages of the subject matter of the present invention will become apparent to a person skilled in the art when studying the following description of presently preferred embodiment referring to the enclosed drawings wherein
- fig. 1: shows a longitudinal sectional view of an actuation means suitable for use in an electronically controlled brake system of a motor vehicle in a first embodiment of the prior art,
- fig. 2: shows a longitudinal sectional view of an actuation means suitable for use in an electronically controlled brake system of a motor vehicle in a second embodiment of the prior art,
- fig. 3: shows a longitudinal sectional view of an actuation means suitable for use in an electronically controlled brake system of a motor vehicle in a first embodiment of the invention,
- fig. 4: shows a longitudinal sectional view of an actuation means suitable for use in an electronically controlled brake system of a motor vehicle in a second embodiment of the invention.

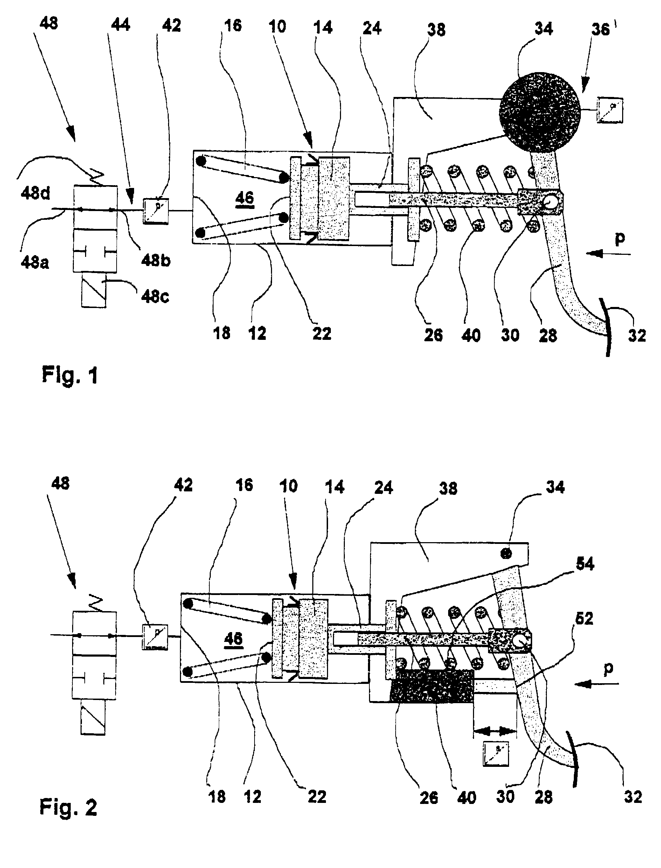

Referring to fig. 1, a prior art actuation means for an electronically controlled brake system of a motor vehicle comprises a cylinder/piston means 10 formed of a hydraulic cylinder 12 and a hydraulic piston 14 axially movable within said cylinder 12. The piston 14 is biased into its rest position by a helical spring means 16 abutting the bottom 18 of the cylinder 12 and the front face 22 of the piston 14. The piston 14 is provided with a hollow cylindrical tube 24 at the side opposite the front face 22. In this tube 24 one end portion of a pushing rod 26 is slidably mounted. The other end portion of the pushing rod 26 is rotatably connected to a brake pedal 28 by a fulcrum 30. The brake pedal 28 is provided with a stepping plate 32 at the free end thereof and is rotatably supported at the other end of the brake pedal 22 by a supporting pin 34. A first sensor means 36 is coupled to the brake pedal 28 or the pin 34 to sense a rotational movement of the brake pedal 28 about the pin 34 relative to a support 38 of the brake pedal 28. A spring means 40 is provided coaxially to the actuation rod 26 and the hollow cylindrical tube 24 intermediate the brake pedal 28 and the piston 14 of the cylinder/piston means 10.

A second sensor means 42 is provided in a fluid conduit 44 connecting a hydraulic chamber 46 in the cylinder/piston means 10 with an electromagnetic valve 48. The second sensor means 42 is a pressure sensor adapted for sensing the pressure in the chamber 46 defined by the cylinder 10 and the piston 14 of the cylinder/piston means 10 and/or in the conduit 44.

In a normal actuation position, the movement of the cylinder/piston means 10 against the spring forces of the spring means 40 is sensed by the first sensor means 36 by detecting the rotational movement of the brake pedal 28 relative to the pin 34.

In the normal actuation position, the electromagnetic valve means 48 is in its closed position. Consequently, the volume of the hydraulic chamber 46 can not be changed by actuating the brake pedal 28. However, the pressure in the hydraulic chamber 46 is increased as the spring means 40 pushes the piston 14 in the direction P upon depression of the brake pedal 28. This is sensed by the second sensor means 42 sensing the pressure in the chamber 46. At the same time, the rotational angle α of the brake pedal 28 about the pin 34 is sensed with the first sensor means 36. The output signals of the two sensor means 36, 42 are fed into an electronic control unit ECU (not shown). Within the electronic control unit, these two sensor signals are processed and among other operations checked for consistency.

The valve means 48 is an electromagnetic valve having two positions, the first position where an inlet port 48a of the valve means 48 is separated from an outlet port 48b and a second position where the inlet port 48a is in fluid connection with the outlet port 48b. Upon energization of an electromagnetic means 48c the electromagnetic valve means 48 is forced into the first position against the force of a spring means 48d. Upon de-energization of the electromagnetic valve means 48, the spring means 48d forces the valve 48 into the second position. The first position where the chamber 46 of the cylinder/piston means 10 is separated from the brake system is the normal actuation position, whereas the second position is the emergency actuation position, where the hydraulic fluid from the chamber 46 is fed into the brake system via the valve means 48 upon an actuation of the brake pedal 28.

In case of a rupture of the spring means 40, the signal from the first sensor means 36 representing the rotational angle of the brake pedal 28 with respect to the pin 34 is inconsistent with the signal from the second sensor means 42 detecting the pressure in the hydraulic chamber 46.

In this prior-art embodiment, the spring means 40 is surrounding the actuation rod 26. Consequently, the cylinder/piston means 10 can be designed as a encapsulated unit independently from the type of motor vehicle in which the actuation means is to be used. The spring means can be selected as desired and mounted in the actuation means without the necessity of changing the design and construction of the cylinder/piston means 10.

In the subsequent figs. 2 to 4, identical, similar or equivalent parts are denoted with the same reference numerals as in fig. 1.

The main difference between the prior art embodiment of fig. 1 and the prior art embodiment of fig. 2 is the type of sensor used to replace the rotational angle sensor 36 in fig. 1. A sensor adapted for sensing the distances between a predetermined location along the brake pedal 28 and the support means 32, namely a linear detector 54 is provided. A part from that, the structure and mode of operation as well as the advantages obtained thereby are the same as with the prior-art embodiment of fig. 1.

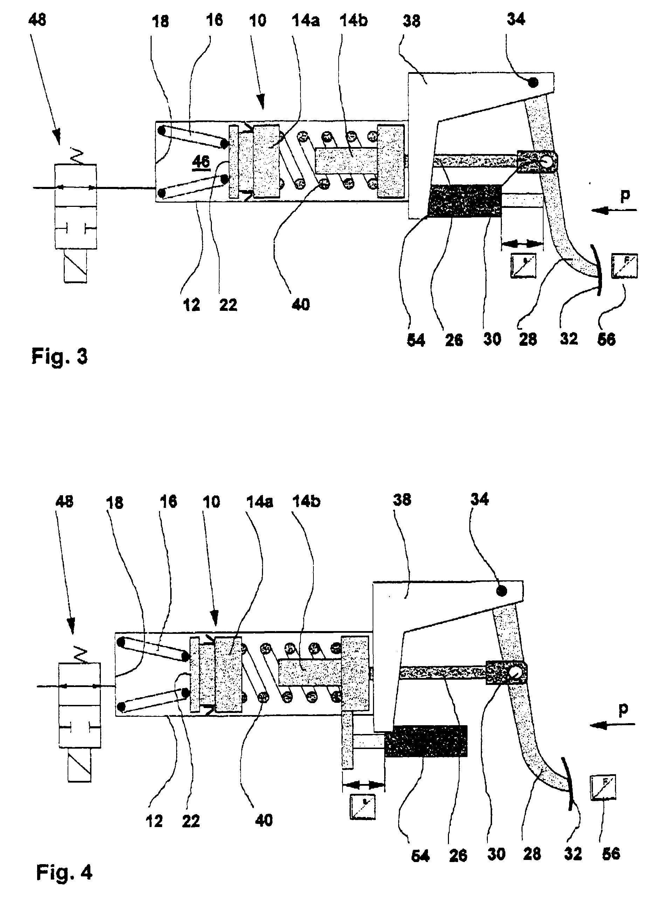

The main difference between the prior art embodiment of fig. 2 and the first embodiment of the invention of fig. 3 is the spring means 40 being mounted within the cylinder/piston means 10. To this end, the piston 14 is comprised of two parts 14a and 14b. The first part 14a is sealing the chamber 46. The second part 14b is rigidly connected with the actuation rod 26 and is held separated from the first part 14a by the spring means 40 in the rest position (shown in fig. 3). In the normal actuation position, the travel path of the brake pedal 28 is sensed with the linear detector 54 between the support 38 and the brake pedal 28. The force acting on the stepping plate 32 is sensed by a force sensor 56 mounted in the stepping plate 32. If a rupture of the spring 40 occurs, the distance measured by the linear detector 54 is inconsistent with the force acting on the stepping plate 32 sensed by the force sensor 56.

The main difference between the first embodiment of the invention of fig. 3 and the second embodiment of the invention of fig. 4 is the sensing of the movement of the actuation rod 26 or the second part 14b of the piston 14 which are rigidly connected to each other relative to the support means 38 of the brake pedal 28 or the cylinder 12 of the cylinder/piston means 10 which are also rigidly coupled to each other.

Again, in case of a rupture of the spring means 40, the signal provided by the force sensor 56 representing the force acted on the stepping plate 32 is inconsistent with the signal provided by the linear detector 54 representing the relative movement between the actuation rod and the second part of the piston 14b relative to the cylinder 12 or the support means 38.

It is also possible to have the force sensor means 56 mounted intermediate the piston 14 and the spring means 40 surrounding the actuation rod 26. Moreover, the spring means 40 may be more than one spring element or several spring elements.

Moreover, the spring means 40 can have a non-linear, preferably progressive, spring characteristic in order to give the driver the same or similar pedal feeling as with an conventional brake system during a normal actuation. An inconsistency between the signal derived from the force sensor 56 and the sensor signal from the distance sensor means provided in the actuation means can be detected by an electronic control unit ECU and indicates the failure of a component in the actuation means.

## Claims

1. Actuation means suitable for use in an electronically controlled brake system of a motor vehicle, comprising
- a cylinder/piston means (10) having a first piston (14a) for feeding hydraulic fluid into a brake system of the motor
- a member (14b) being connected to an actuation rod (26) and being held separated from said first piston (14a) by a spring means (40) being mounted intermediate said member and said first piston,
- said actuation rod (26) being mounted intermediate a brake pedal (28) and said member (14b) and being in-line with said first piston (14a),
- said spring means (40) resiliently biasing the brake pedal (28) against an actuation direction (P) of the brake pedal (28),
- at least two sensor means (36, 42, 54, 56) for sensing dimensions related to a normal actuation of the brake pedal (28), said at least two sensor means (36, 42, 54, 56) output sensor signals to an electronic control unit where they are processed and verified,
- a first of said sensor means (56) sensing a force (F) representative of an actuation force acting on said brake pedal (28), characterized in that
- said member (146) is a second piston of the cylinder/piston means (10) not for feeding hydraulic fluid into the brake system of the motor vehicle, in that
- said second piston (14b) and said spring means (40) being located within the cylinder/piston means (10), and in that
- a second of said sensor means (54) is sensing the distance (S) between a predetermined location on said brake pedal (28) and a location being in a fixed relation to a support means (38) of said brake pedal (28), or resulting from a movement of the second piston (14b) relative to the cylinder (12) of said cylinder/piston means (10).

2. Actuation means suitable for use in an electronically controlled brake system according to claim 1, characterized in that
- a third of said sensor means (42) is adapted for sensing a pressure (P) representative for a pressure in a chamber (46) of the cylinder/piston means (10) delimited by said first piston (14a).

3. Actuation means suitable for use in an electronically controlled brake system according to any of claims 1 or 2, characterized in that
- said spring means (40) is mounted coaxially to said first and second piston (14a, 14b) and/or said actuation rod (26).

4. Actuation means suitable for use in an electronically controlled brake system according to any of claims 1 to 3, characterized in that said support means (38) is rigidly coupled to said cylinder (12) of the cylinder/piston means (10).

5. Electronically controlled brake system of a motor vehicle comprising an actuation means of any of claims 1 to 4, characterized in that
- a valve means (48) is mounted intermediate said cylinder/piston means (10) and the brake system of the motor vehicle to separate a chamber (46) of the cylinder/piston means (10) delimited by said first piston (14a) from the brake system during a normal actuation and to connect said chamber (46) with the brake system for an emergency actuation.

6. Electronically controlled brake system of a motor vehicle comprising an actuation means of any of claims 1 to 4, characterized in that
- said electronic control unit (ECU) is adapted to put sensor signals representing a dimension resulting from an actuation of the brake pedal (28) into a relation with a speed, acceleration and/or traction signal resulting from the rotational behaviour of the wheels of said motor vehicle.

## Patentansprüche

1. Betätigungseinrichtung, geeignet zur Verwendung in einem elektronisch gesteuerten Bremssystem eines Kraftfahrzeugs, die folgendes aufweist:
- eine Zylinder-/Kolbeneinrichtung (10) mit einem ersten Kolben (14a) zum Einspeisen von Hydraulikfluid in ein Bremssystem des Kraftfahrzeugs,
- ein Element (14b), das mit einer Betätigungsstange (26) verbunden ist und von einer Federeinrichtung (40), die zwischen dem Element und dem ersten Kolben eingebaut ist, vom ersten Kolben (14a) getrennt gehalten wird,
- wobei die Betätigungsstange (26) zwischen einem Bremspedal (28) und dem Element (14b) und mit dem ersten Kolben (14a) in Reihe liegend eingebaut ist,
- wobei die Federeinrichtung (40) das Bremspedal (28) gegen die Betätigungsrichtung (P) des Bremspedals (28) federnd vorspannt,
- mindestens zwei Sensoreinrichtungen (36, 42, 54, 56) zum Erfassen von Größen in Zusammenhang mit einer Normal-Betätigung des Bremspedals (28), wobei die mindestens zwei Sensoreinrichtungen (36, 42, 54, 56) Sensorsignale an eine elektronische Steuerungseinheit abgeben, wo sie verarbeitet und verifiziert werden,
- wobei eine erste der Sensoreinrichtungen (56) eine Kraft (F) erfaßt, die für eine auf das Bremspedal (28) wirkende Betätigungskraft repräsentativ ist,
dadurch gekennzeichnet, daß
- das Element (14b) ein zweiter Kolben der Zylinder-/Kolbeneinrichtung (10) ist, der nicht zum Einspeisen von Hydraulikfluid in das Bremssystem des Kraftfahrzeugs dient, daß
- der zweite Kolben (14b) und die Federeinrichtung (40) innerhalb der Zylinder-/Kolbeneinrichtung (10) angeordnet sind, und daß
- eine zweite der Sensoreinrichtungen (54) den Abstand (S) zwischen einer vorgegebenen Stelle auf dem Bremspedal (28) und einer in einer festen Beziehung zu einer Halterungseinrichtung (38) des Bremspedals (28) stehenden Stelle oder aufgrund einer Bewegung des zweiten Kolbens (14b) relativ zum Zylinder (12) der Zylinder-/Kolbeneinrichtung (10) erfaßt.

2. Betätigungseinrichtung, geeignet zur Verwendung in einem elektronisch gesteuerten Bremssystem nach Anspruch 1, dadurch gekennzeichnet, daß
- eine dritte der Sensoreinrichtungen (42) zum Erfassen eines Drucks (P) eingerichtet ist, der für einen Druck in einer Kammer (46) der Zylinder-/Kolbeneinrichtung (10) repräsentativ ist, die durch den ersten Kolben (14a) begrenzt wird.

3. Betätigungseinrichtung, geeignet zur Verwendung in einem elektronisch gesteuerten Bremssystem nach Anspruch 1 oder 2, dadurch gekennzeichnet, daß
- die Federeinrichtung (40) koaxial zum ersten und zweiten Kolben (14a, 14b) und/oder zur Betätigungsstange (26) angeordnet ist.

4. Betätigungseinrichtung, geeignet zur Verwendung in einem elektronisch gesteuerten Bremssystem nach einem der Ansprüche 1 bis 3, dadurch gekennzeichnet, daß die Halterungseinrichtung (38) starr mit dem Zylinder (12) der Zylinder-/Kolbeneinrichtung (10) gekoppelt ist.

5. Elektronisch gesteuertes Bremssystem eines Kraftfahrzeugs, das eine Betätigungseinrichtung nach einem der Ansprüche 1 bis 4 aufweist, dadurch gekennzeichnet, daß
- eine Ventileinrichtung (48) zwischen der Zylinder-/Kolbeneinrichtung (10) und dem Bremssystem des Kraftfahrzeugs eingebaut ist, um eine Kammer (46) der Zylinder-/Kolbeneinrichtung (10), die durch den ersten Kolben (14a) begrenzt wird, während einer Normal-Betätigung vom Bremssystem zu trennen, und um die Kammer (46) für eine Notfall-Betätigung mit dem Bremssystem zu verbinden.

6. Elektronisch gesteuertes Bremssystem eines Kraftfahrzeugs, das eine Betätigungseinrichtung nach einem der Ansprüche 1 bis 4 aufweist, dadurch gekennzeichnet, daß
- die elektronische Steuerungseinheit (ECU) dazu eingerichtet ist, Sensorsignale, die eine Größe aufgrund einer Betätigung des Bremspedals (28) repräsentieren, in Beziehung zu einem Geschwindigkeits-, Beschleunigungs- und/oder Traktionssignal zu setzen, die aus dem Rotationsverhalten der Räder des Kraftfahrzeugs resultieren.

## Revendications

1. Moyen d'actionnement convenant pour une utilisation dans un système de freinage à commande électronique d'un véhicule à moteur, comprenant
- un moyen cylindre/piston (10) ayant un premier piston (14a) pour amener un fluide hydraulique à un système de freinage d'un véhicule à moteur,
- un élément (14b) n'amenant pas de fluide hydraulique dans le système de freinage du véhicule à moteur, étant connecté à une tige d'actionnement (26) et étant maintenu séparé dudit premier piston (14a) par un moyen à ressort (40) monté entre ledit élément et ledit premier piston,
- ladite tige d'actionnement (26) étant montée entre une pédale de frein (28) et ledit élément (14b) et étant alignée avec ledit premier piston (14a),
- ledit moyen à ressort (40) poussant de manière élastique la pédale de frein (28) contre la direction d'actionnement (P) de cette pédale de frein (28),
- au moins deux capteurs (36, 42, 54, 56) pour détecter des dimensions relatives à un actionnement normal de la pédale de frein (28), lesdits au moins deux capteurs (36, 42, 54, 56) émettant des signaux de détection vers une unité de commande électronique où ils sont traités et vérifiés,
- un premier capteur (56) parmi les capteurs détectant une force (F) représentant une force d'actionnement agissant sur ladite pédale de frein (28),
caractérisé en ce que
- ledit élément (14b) est un second piston du moyen cylindre/piston (10) n'amenant pas de fluide hydraulique au système de freinage du véhicule à moteur,
- en ce que ledit second piston (14b) et ledit moyen à ressort (40) sont situés à l'intérieur du moyen cylindre/piston (10), et en ce que
- un second capteur (54) parmi lesdits capteurs détecte la distance (S), entre un lieu prédéterminé sur ladite pédale de frein (28) et un lieu en relation fixe avec un moyen de support (38) de ladite pédale de frein (28), résultant d'un mouvement du second piston (14b) par rapport au cylindre (12) dudit moyen cylindre/piston (10).

2. Moyen d'actionnement convenant pour une utilisation dans un système de freinage à commande électronique selon la revendication 1, caractérisée en ce que
- un troisième capteur (42) parmi les capteurs est conçu pour détecter une pression (P) représentative de la pression dans une chambre (46) du moyen cylindre/piston (10) délimitée par ledit premier piston (14a).

3. Moyen d'actionnement convenant pour une utilisation dans un système de freinage à commande électronique selon l'une quelconque des revendications 1 ou 2, caractérisé en ce que
- ledit moyen à ressort (40) est monté de manière coaxiale auxdits premier et second pistons (14a, 14b) et/ou à ladite tige d'actionnement (26).

4. Moyen d'actionnement convenant pour une utilisation dans un système de freinage à commande électronique selon l'une quelconque des revendications 1 ou 3, caractérisé en ce que ledit moyen de support (38) est coupé rigidement audit cylindre (12) du moyen cylindre/piston (10).

5. Système de freinage à commande électronique d'un véhicule à moteur comprenant un moyen d'actionnement selon l'une quelconque des revendications 1 à 4, caractérisé en ce que
- une soupape (48) est montée entre ledit moyen cylindre/piston (10) et le système de freinage du véhicule à moteur pour séparer une chambre (46) du moyen cylindre/piston (10), délimitée par ledit premier piston (14a), du système de freinage pendant un actionnement normal et pour connecter ladite chambre (46) au système de freinage pour un actionnement d'urgence.

6. Système de freinage à commande électronique d'un véhicule à moteur comprenant un moyen d'actionnement selon l'une quelconque des revendications 1 à 4, caractérisé en ce que
- ladite unité de commande électronique (ECU) est adaptée pour mettre les signaux de détection représentant une dimension résultant de l'actionnement de la pédale de frein (28) en relation avec une vitesse, une accélération et/ou signal de traction résultant du comportement rotatif des roues dudit véhicule à moteur.
